# FASCICULE DE BREVET EUROPEEN

(11) **EP 1 126 639 B1**
(45) Date de publication et mention de la délivrance du brevet: **21.05.2003**
(21) Numéro de dépôt: 01400237.2
(22) Date de dépôt: 30.01.2001
(51) Int. Cl.: H04B 10/24, H04L 5/14

(54) **Procédé d'établissement d'une communication optique bidirectionnelle entre une équipement de centre et un équipement distant**
Optisches bidirektionelles Übertragungsaufbauverfahren zwischen ein zentrales und ein entferntes Gerät
Optical bidirectional communication setup method between central and remote equipment

(30) Priorité: 15.02.2000 FR 0001924
(43) Date de publication de la demande: 22.08.2001
(73) Titulaire: FRANCE TELECOM, 75015 Paris (FR)
(72) Inventeur: Bourgart, Fabrice, 22700 Perros-Guirec (FR)
(74) Mandataire: Lemoyne, Didier

(56) Documents cités:
- EP-A- 0 821 502
- US-A- 4 720 827
- US-A- 5 111 451
- US-A- 5 305 306

## Description

La présente invention concerne un procédé d'établissement d'une communication optique bidirectionnelle entre un équipement de centre et un équipement distant.

L'invention trouve une application particulièrement avantageuse dans le domaine des télécommunications sur fibres optiques et plus spécialement celui des réseaux d'accès du type point à point.

Actuellement, en matière de télécommunications sur fibres optiques, on connaît des réseaux d'accès dans lesquels un équipement de centre donné est raccordé à un équipement distant situé chez un client donné. Ce type de technologie est appelé « point à point » par opposition avec la technologie « point-multipoint » où un équipement de centre peut être raccordé côté clients à une pluralité d'équipements distants. Même si elle s'adresse préférentiellement à une transmission point à point, l'invention peut tout aussi bien s'appliquer dans le cadre d'une transmission point-multipoint, en particulier la transmission dite PON, du terme anglo-saxon « Passive Optical Network ».

Le mode de communication le plus souvent utilisé en technologie point à point est le mode de communication simultanée connu sous le nom simplex, lequel met en oeuvre une fibre optique dans chaque sens de transmission.

Jusqu'à présent, les opérateurs de télécommunications, notamment sur fibres optiques, avaient la maîtrise des deux extrémités du lien de transmission, à savoir l'équipement de centre et l'équipement distant, qui étaient installés, ou retirés, simultanément. Cette situation impliquait pour les opérateurs une certaine stabilité technologique et la propriété inaliénable de leurs clients et de leur équipement.

Aujourd'hui, le contexte dans lequel évoluent les opérateurs s'est considérablement modifié du fait des changements intervenus dans la technologie des composants optoélectroniques, de l'introduction de la concurrence sur le marché des télécommunications sur fibres optiques, et de l'apparition de nouvelles techniques comme le WDM (pour « Wavelength Division Multiplexing ») ou « multiplexage en longueur d'onde ». En substance, le WDM se distingue des techniques habituellement utilisées sur les réseaux d'accès à fibres optiques en ce que les techniques connues en usage actuellement mettent en oeuvre entre l'équipement de centre et l'ensemble des équipements distants des clients une ou deux longueurs d'onde choisies dans des fenêtres spectrales centrées autour de 1,3 ou 1,5 µm, les composants optoélectroniques des divers équipements étant du type large bande, alors que dans la technique WDM au moins la fenêtre de l'équipement de centre, 1,5 µm de préférence, est découpée en une pluralité de longueurs d'onde porteuses, chacune étant affectée à un équipement distant particulier. Par exemple, dans le DWDM (« Dense Wavelength Division Multiplexing ») la fenêtre autour de 1,5 µm, qui s'étend en fait de 1,48 à 1,58 µm, est divisée en 64 canaux de longueurs d'onde porteuses. De manière pratique, chaque équipement distant peut être muni d'un filtre centré sur le canal qui lui est attribué tandis que l'équipement de centre comprend un ou plusieurs lasers accordables, aptes à émettre sur chaque longueur d'onde porteuse.

Cette situation nouvelle a eu pour conséquence d'obliger les opérateurs à prévoir une certaine intéropérabilité entre leurs équipements de centre et les équipements distants de leurs clients. Cette intéropérabilité présente par ailleurs de nombreux avantages puisqu'elle permet en particulier de diminuer le prix des composants par la mise en concurrence des fabricants et de diversifier les sources d'approvisionnement. D'autre part, l'intéropérabilité facilite l'introduction de nouvelles techniques, comme le WDM. Enfin, du fait de l'indépendance obtenue entre les équipements, l'opérateur n'est plus tenu de gérer au jour le jour le parc d'équipements aux deux extrémités de la liaison ni de le maintenir en cohérence lors d'un remplacement partiel.

Toutefois, l'intéropérabilité suppose que les équipements de centre et les équipements distants puissent être reliés indépendamment de l'identité et des choix de réalisation des constructeurs. Or, s'il reste maître de l'équipement de centre, un opérateur n'a pas nécessairement une connaissance aussi fiable des équipements distants qu'il va avoir à raccorder à son réseau, notamment en ce qui concerne leur mode de communication.

La demande US-A-5,111,451 concerne l'établissement d'une communication optique biodirectionnelle entre deux équipements.

Aussi, le problème technique à résoudre par l'objet de la présente invention est de proposer un procédé d'établissement d'une communication optique bidirectionnelle entre un équipement de centre et un équipement distant apte à fonctionner selon un mode de communication donné choisi parmi une pluralité de modes de communication, qui permettrait à l'équipement de centre de détecter « à l'aveugle », sans intervention humaine, le type d'équipement distant auquel il est relié, de pouvoir s'interfacer avec un maximum de variantes technologiques quant à la réalisation de l'équipement distant, et d'être capable de s'adapter aux techniques nouvelles comme le WDM.

La solution au problème technique posé consiste, selon la présente invention, en ce que ledit procédé comprend les étapes consistant à :
- définir dans l'équipement de centre une pluralité de structures de trame, chaque structure de trame étant appropriée à un desdits modes de communication,
- émettre de manière séquentielle ladite pluralité de structures de trame jusqu'à obtenir une réponse cohérente dudit équipement distant, le mode de communication de l'équipement distant étant celui correspondant à la structure de trame ayant provoqué ladite réponse cohérente.

Ainsi, le procédé conforme à l'invention permet à l'équipement de centre de reconnaître automatiquement, en début de transmission, le mode de communication de l'équipement distant afin de déterminer quelle structure de trame devra être utilisée durant toute la transmission.

L'invention réalise donc une compatibilité la plus large possible entre les deux extrémités du lien de communication et une adaptabilité complète aux technologies existantes et à venir, telles que le WDM, sans qu'il soit nécessaire de développer une électronique nouvelle de l'équipement de centre à chaque étape des évolutions technologiques.

Bien entendu, le procédé, objet de l'invention, s'applique à tous les modes de communication. Il est prévu en particulier que la pluralité de modes de communication comprend des modes de communication simultanée et des modes de communication alternée. A titre d'exemple, les modes de communication simultanée comprennent les modes simplex, full duplex et diplex, et les modes de communication alternée comprennent les modes half duplex et part duplex.

Selon un mode de réalisation de l'invention qui sera décrit en détail plus loin, la structure de trame appropriée aux modes de communication simultanée est constituée par une trame complète, sans interruption de transmission, la réponse de l'élément distant étant dans ce cas une trame émise de façon asynchrone.

De même, l'invention prévoit que la structure de trame appropriée aux modes de communication alternée est constituée par une trame avec interruption de transmission afin de permettre à l'équipement distant d'émettre entre l'interruption de transmission de l'équipement de centre et la fin de la trame. Dans un cas particulier, l'élément distant étant un modulateur à réflexion, la trame consiste, après interruption de transmission, en un niveau constant destiné à être modulé et réfléchi par ledit élément distant.

Dans le cas où la technique WDM est appliquée, l'équipement de centre doit utiliser en émission la longueur d'onde qui a été attribuée à chaque équipement distant. Or, celle-ci n'est pas nécessairement connue du système lors de sa mise en service. Il y a donc avantage à introduire dans le procédé, objet de l'invention, une procédure de recherche automatique de la longueur d'onde affectée à l'équipement distant avec lequel le centre cherche à communiquer. Dans ce but, il est prévu deux modes de réalisation possibles.

Selon un premier mode de réalisation, l'équipement distant étant différencié en longueur d'onde, l'étape d'émettre de manière séquentielle la pluralité de structures de trame est effectuée successivement pour chaque longueur d'onde d'équipement distant tant que ladite réponse cohérente n'est pas obtenue.

Selon un deuxième mode de réalisation, l'équipement distant étant différencié en longueur d'onde, l'étape d'émettre de manière séquentielle la pluralité de structures de trame est effectuée successivement pour chaque longueur d'onde d'équipement distant à chaque structure de trame tant que ladite réponse cohérente n'est pas obtenue.

La description qui va suivre en regard des dessins annexés, donnés à titre d'exemples non limitatifs, fera bien comprendre en quoi consiste l'invention et comment elle peut être réalisée.

La figure 1a est un schéma d'un premier mode de réalisation d'une liaison optique entre un équipement de centre et un équipement distant.

La figure 1b est un schéma d'un deuxième mode de réalisation d'une liaison optique entre un équipement de centre et un équipement distant.

La figure 2a est une structure de trame appropriée à la mise en oeuvre du procédé conforme à l'invention aux modes de communication simultanée.

La figure 2b est une structure de trame appropriée à la mise en oeuvre du procédé conforme à l'invention aux modes de communication alternée.

La figure 2c est une variante de la structure de trame de la figure 2b.

La figure 3 est un diagramme montrant les étapes successives d'un procédé conforme à l'invention.

La figure 4 est un schéma électrique d'un équipement de centre pour la mise en oeuvre du procédé représenté sur le diagramme de la figure 3.

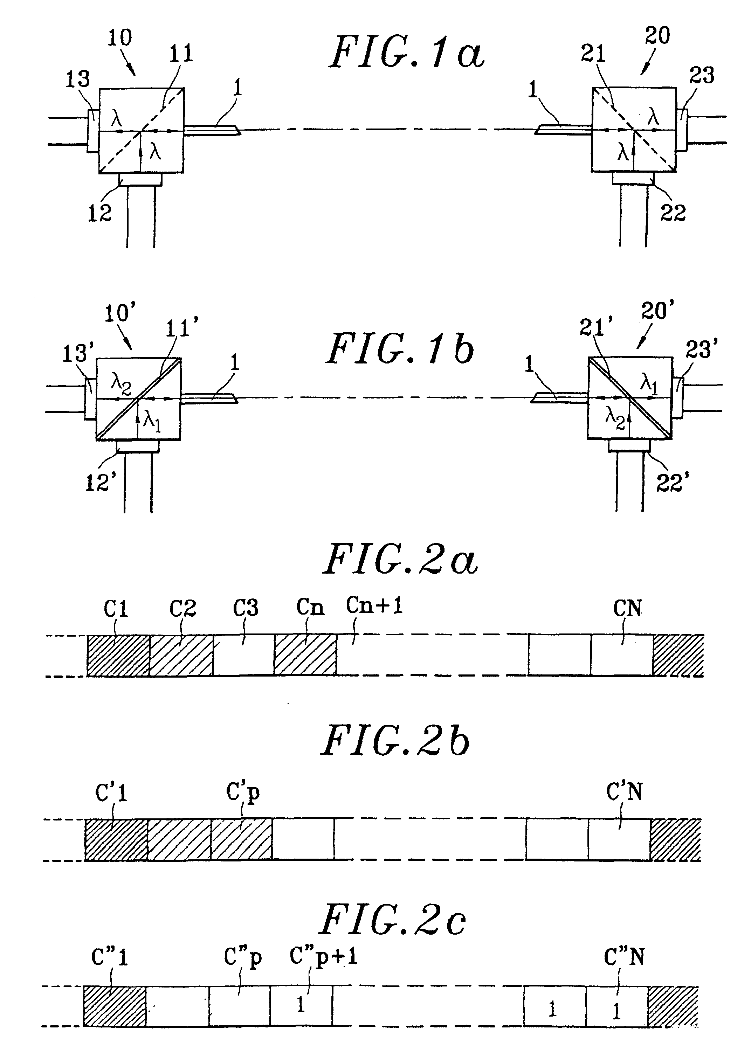

Sur la figure 1a est représentée une liaison par fibre optique 1 entre un équipement 10 de centre et un équipement distant 20. Dans cet exemple, les équipements 10 et 20 sont du type duplexeur. Ils sont constitués, d'une part, d'un émetteur 12, respectivement 22, ces émetteurs étant de préférence des diodes laser à la longueur d'onde λ, et, d'autre part, d'un détecteur 13, respectivement 23, ces détecteurs étant notamment des photodiodes sensibles à la longueur d'onde λ. Comme le montre la figure 1a, les rayons lumineux émis et reçus par chaque équipement sont séparés par des lames semi-réfléchissantes 11, respectivement 21.

Les équipements du type duplexeur, tels qu'illustrés sur la figure 1a, sont bien adaptés aux modes de communication alternée comme le half duplex et sa variante le part duplex. Le mode half duplex consiste à émettre sur la fibre 1 d'abord l'information vers l'équipement distant 20 puis l'information vers l'équipement 10 de centre. Ce mode de communication nécessite une vitesse de transmission au moins supérieure à deux fois celle nécessaire à transmettre l'information dans un sens puisqu'il faut en plus tenir compte du temps de propagation sur la fibre 1. Le mode part duplex permet, sous condition d'un équipement 10 de centre capable d'émission et de réception simultanées, de s'affranchir du temps de propagation. Il faut pour celà réaliser à l'initialisation de la liaison un calcul du temps de propagation entre les deux équipements 10 et 20 et d'adapter l'émission de l'information de manière à respecter le fonctionnement alternée exclusivement à l'entrée de l'équipement distant 20.

Le duplexeur de la figure 1a peut également convenir au mode de communication simultanée full duplex à condition que les détecteurs 13, 23 ne soient pas éblouis par leurs propres émetteurs 12, 22 ou du fait de l'ensemble de la ligne 1.

La figure 1b montre une variante du duplexeur de la figure 1a, appelé diplexeur, qui utilise sur une même fibre optique 1' une longueur d'onde λ1 dans un sens de transmission et une longueur d'onde λ2 dans l'autre sens de transmission. Ce composant est donc bien adapté au mode de communication simultanée appelé dans ce cas diplex. Dans l'exemple de la figure 1b, la séparation des longueurs d'onde en émission et en réception est réalisée par des filtres dichroïques 11', 21' disposés à la place des lames semi-réfléchissantes 11, 21 de la figure 1a. Selon les standards de l'ETSI et de l'ITU-T, les longueurs d'onde λ1 et λ2 de l'équipement 10' de centre et de l'équipement distant 20' sont choisies respectivement dans une fenêtre autour de 1,5 µm et de 1,3 µm.

Le diplexeur de la figure 1b est également compatible avec la technique WDM qui utilise une longueur d'onde dans une fenêtre autour de 1,3 µm côté équipement distant et, du côté de l'équipement de centre, une pluralité de longueurs d'onde dans la fenêtre autour de 1,5 µm, laquelle présente le minimum d'affaiblissement kilométrique de la fibre optique et une plus grande disponibilité des amplificateurs optiques dans cette seule fenêtre. A chaque équipement distant est affectée une longueur d'onde porteuse émise par l'équipement de centre. Le WDM est en fait une extension du principe du mode diplex, généralement utilisé pour l'augmentation de capacité en débit d'une liaison optique ou pour le partage de la liaison entre plusieurs services ou plusieurs clients. Bien entendu, l'équipement distant doit comporter en réception un filtre associé à la longueur qui lui a été attribué et l'équipement de centre doit pouvoir émettre, au moyen de lasers accordables par exemple, dans chacun des canaux définis dans la fenêtre à 1,5 µm.

D'autres composants électro-optiques, non représentés, sont susceptibles d'être utilisés dans le cadre de l'invention, à savoir :
- Les composants réversibles. Il s'agit de lasers ou de diodes électroluminescentes qui, selon leur polarisation, se comportent soit comme un émetteur, soit comme un détecteur. Actuellement, ces deux fonctionnements n'étant pas simultanés, il est nécessaire d'avoir un dispositif électronique de commutation entre les deux états et un mode de communication alternée half duplex ou part duplex. L'intérêt de ce type de composant est que tous les lasers du commerce sont capables de ce mode de fonctionnement et qu'il y a unicité du couplage composant/fibre, ce qui diminue d'autant les pertes et les difficultés d'alignement et peut donc conduire à de faibles coûts.
- Les composants diplexeurs linéaires intégrés. Ce sont des structures linéaires monolithiques comportant une cavité laser et un détecteur dans le même alignement d'une seule fibre. Aujourd'hui, ces composants ne sont utilisables qu'en mode diplex.
- Les composants à réflexion. Ces composants comportent une partie réception et une partie miroir destiné à moduler et réfléchir la puissance lumineuse incidente. Ils sont donc passifs, non générateurs de lumière, sur la longueur d'onde utilisée qui est celle du signal continu incident. De ce fait, ces composants conviennent particulièrement aux modes half duplex ou part duplex en WDM. En effet, l'opérateur n'a pas alors à gérer différents types d'équipements distants spécifiés en longueur d'onde, de les associer à la bonne extrémité de réseau, ni de les asservir en température. C'est en effet le réseau passif qui affecte la longueur d'onde du client et seul l'équipement de centre placé dans un environnement climatique stable est à contrôler. Par contre, un asservissement en température peut être nécessaire pour maintenir la puissance optique émise.

Il faut enfin signaler un autre mode de communication simultanée connu sous le nom de simplex qui s'appuie sur deux fibres optiques, chacune étant dédiée à un sens de transmission.

De manière à réaliser l'intéropérabilité des équipements indépendamment du mode de communication utilisé, l'équipement 10, 10' de centre doit pouvoir identifier le mode de communication de l'équipement distant 20, 20' avec lequel une communication optique bidirectionnelle a été établie.

A cet effet, on prévoit un procédé d'établissement d'une communication optique bidirectionnelle entre l'équipement 10, 10' de centre et l'équipement distant 20, 20' qui consiste à définir dans l'équipement 10, 10' de centre différentes structures de trame, chacune étant appropriée à un mode de communication, et à émettre de manière séquentielle ces structures de trame jusqu'à obtenir une réponse cohérente de l'équipement distant 20, 20'. Le mode de communication de l'équipement distant est celui qui aura provoqué ladite réponse cohérente.

Rappelons que ce procédé permet à l'opérateur de :
- bénéficier d'une pérennité de ses équipements de centre,
- éviter le développement d'une nouvelle électronique à l'occasion du passage d'un mode de communication à un autre,
- rendre transparent à l'opérateur le type d'équipement distant lors d'une mise en service, ce qui ne l'empêchera pas de le gérer une fois la connexion établie,
- automatiser les mises en services,
- pouvoir renouveler son parc d'équipements de manière indépendante entre le centre et le client,
- pouvoir basculer ses approvisionnements d'équipements de centre sans retard ni inertie en raison d'un parc déjà installé.

Les figures 2a, 2b et 2c donnent des exemples de trames appropriées respectivement aux modes de communication simultanée, alternée et alternée par réflexion modulée.

La trame de la figure 2a est applicable aux modes simplex, full duplex et diplex. Elle se compose d'une cellule C1 d'en-tête, du type PLOAM (« Physical Layer Operating And Maintenance ») par exemple, destinée à l'échange d'informations entre l'équipement de centre et l'équipement distant sur l'état de la couche physique. Les cellules suivantes C2, C3,..., Cn sont des cellules de données pouvant inclure au besoin une ou des cellules de gestion des équipements distants. Le centre procède au bourrage des cellules « vides » Cn+1,..., CN éventuellement restantes afin de maintenir la présence d'une horloge pour la synchronisation de l'horloge de l'équipement distant. La trame de la figure 2a est donc complète, sans interruption de transmission.

La trame de la figure 2b, adaptée aux modes de communication alternée, repose sur le même principe sauf qu'il est nécessaire d'interrompre la transmission pour que l'équipement distant puisse émettre à son tour entre l'interruption de transmission et la fin de la trame. L'indication d'interruption de transmission peut être fournie dans la cellule C'1 d'en-tête par le nombre de cellules constituant l'information descendante du centre vers le client, ou par une cellule C'p de fin de trame qui sera reconnue par l'équipement distant. Dans le premier cas, l'équipement distant mettra en route un compteur de cellules reçues et basculera en émission lorsqu'il aura lu le nombre de cellules annoncé dans la cellule C'1 d'en-tête.

L'adaptation au mode part duplex ne présente pas de difficulté particulière, seul un calcul préalable du temps de propagation aller-retour est nécessaire afin de permettre l'entrelacement des trames aller et retour, tout en respectant l'alternance au niveau de l'équipement distant. Dans ce cas, on adapte la longueur de la trame en fonction du temps de propagation.

La trame de la figure 2c correspond au mode alterné pour un équipement distant constitué d'un modulateur à réflexion. Le principe de la trame est d'établir une alternance dont la partie allouée à l'émission de l'équipement distant consiste en un niveau continu qui sera modulé en tout ou rien puis renvoyé vers l'équipement de centre.

De même que dans le cas de la figure 2b, la longueur de la trame peut être ajustée au besoin. Les ordres d'interruption de transmission sont là aussi indiqués dans un champ de la cellule C"1 d'en-tête ou via une cellule C"p de fin de trame reconnue par l'équipement distant. Les cellules C"p+1 à C"N comprennent des « 1 » pour modulation par l'équipement distant.

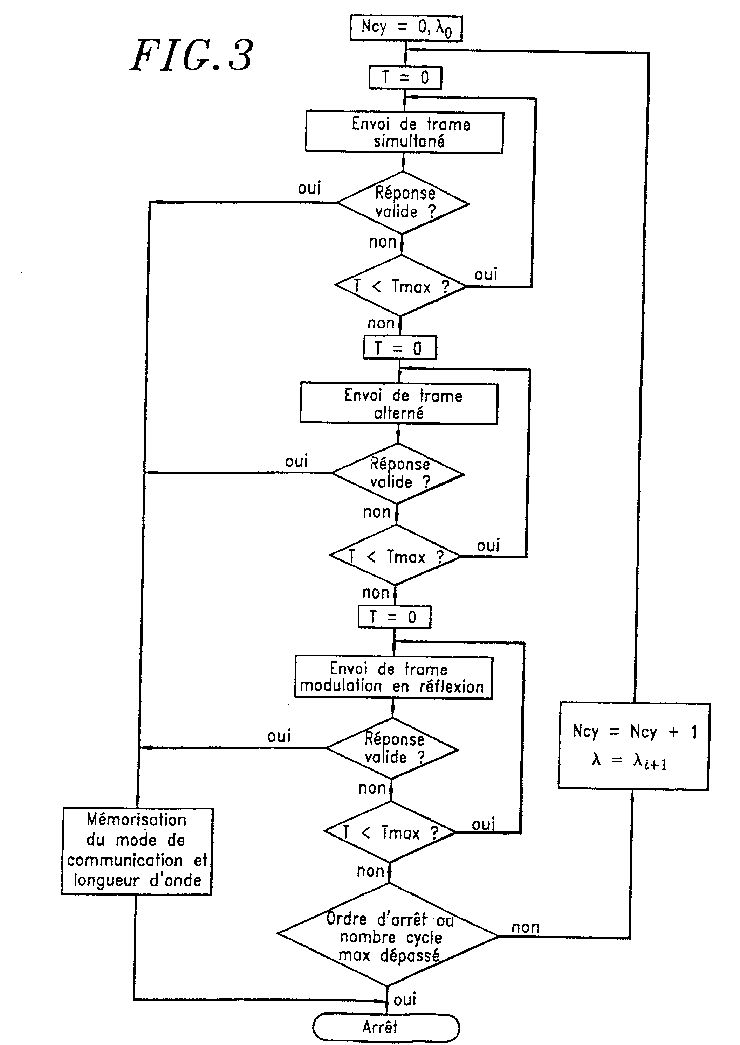

Le diagramme de la figure 3 illustre un mode de mise en oeuvre des trames des figures 2a, 2b et 2c.

Au cours d'une phase d'initialisation, le nombre Ncy de cycles de recherche est mis à zéro. Dans l'hypothèse d'un fonctionnement selon la technologie WDM où chaque équipement distant est différencié par sa longueur d'onde porteuse λi, l'émission séquentielle des structures de trame se fera successivement en commençant par une première longueur d'onde λo sélectionnée dans la fenêtre d'émission de l'équipement de centre.

Dans une première étape, l'équipement de centre commence par émettre une trame appropriée à un mode de communication simultanée (figure 2a), sans cellule d'interruption d'émission. Si l'équipement distant est du type simplex, full duplex ou diplex, il se mettra à émettre, dès réception de la synchronisation et de la cellule C1 d'en-tête, un flux continu de cellules vers l'équipement de centre en commençant par une cellule d'en-tête PLOAM par exemple, répétée au rythme de la trame. Dans tous les autres cas l'équipement distant reste muet.

Si au cours de la première étape aucune réponse cohérente n'a été détectée pendant le laps de temps Tmax nécessaire au démarrage à froid de l'élément distant, l'équipement de centre change la structure de trame pour celle adaptée aux modes de communication alternée half duplex ou part duplex (figure 2b). La trame commence par une cellule C'1 d'en-tête qui, selon un mode de réalisation, contient le nombre de cellules constituant la trame descendante du centre vers le client qui déterminera l'interruption de l'émission de l'équipement de centre et le basculement de l'équipement distant en position d'émission de sa propre cellule PLOAM. Cette trame sera répétée pendant la durée maximale de démarrage à froid de l'équipement distant. Si dans l'intervalle une cellule PLOAM remontant vers le centre a été détectée, ce dernier peut éventuellement tenter une optimisation en part duplex après mesure du temps de propagation aller-retour.

Dans le cas où aucune réponse n'est détectée dans le temps imparti, deux possibilités subsistent: soit il n'y a pas d'élément distant activé, soit il fonctionne selon le mode de modulation en réflexion. L'équipement distant émet alors la troisième structure de trame (figure 2c). En cas d'échec dans le temps imparti pour cette dernière étape, l'opérateur pourra au choix arrêter la procédure ou tenter de renouveler le processus en incrémentant le nombre Ncy de cycles de recherche jusqu'à ce qu'il atteigne un nombre maximum prédéterminé.

Si la technique WDM est utilisée, on pourra également changer en fin de cycle la longueur d'onde porteuse et recommencer l'analyse de trame descendante. On remarquera que ce fonctionnement en WDM est compatible avec les techniques habituelles utilisant des composants large bande, lesquels répondront dès la première longueur d'onde λo. Enfin, il faut également signaler que le WDM pourrait également être pris en compte en effectuant un balayage en longueur d'onde pour chaque type de structure de trame émise.

La séquence des étapes du diagramme de la figure 3 est donné à titre indicatif. Il n'est pas exclusif d'autres séquences qui pourraient s'avérer plus avantageuses. En particulier, on peut envisager que le centre émette dans la première étape une trame appropriée aux modes de communication alternée. Ceci n'est toutefois possible que sous certaines conditions :
- soit d'implémenter dans l'équipement distant un logiciel permettant la différenciation entre un équipement half duplex et full duplex afin que chacun ne puisse répondre que lorsqu'il est adressé. Ce logiciel peut simplement consister à détecter si la cellule d'interruption d'émission, ou son numéro figurant dans la cellule PLOAM de la trame descendante, coïncide avec la dernière cellule de la trame ou non. Lors de la transmission de la trame par l'équipement de centre, l'équipement distant sera à même de déterminer le nombre de cellules constituant la trame. Il lui sera donc facile de vérifier si la cellule d'interruption ou le numéro de la dernière cellule utile indiquée dans la cellule PLOAM coïncide avec la dernière cellule de trame ou non. Ainsi, un équipement full duplex ne s'autorisera à émettre que dans le cas où ces chiffres coïncident, au contraire du half duplex qui ne s'autorisera une ré-émission que dans le cas contraire,
- soit d'indiquer explicitement par un champ spécifique dans la cellule PLOAM quelle structure de trame est en cours d'emploi de sorte que l'équipement distant sache s'il est autorisé à émettre ou non,
- soit d'analyser finement par l'équipement de centre la trame ré-émise par l'équipement distant. En effet, un équipement full duplex générera à sa mise en service une trame continue vers l'équipement de centre, tandis qu'un équipement half duplex n'en générera une que jusqu'à l'instant de répétition de la trame. Ce mode de discrimination est avantageux en ce qu'il n'impose pas de contrainte ni de fonction spécifique à l'équipement distant.

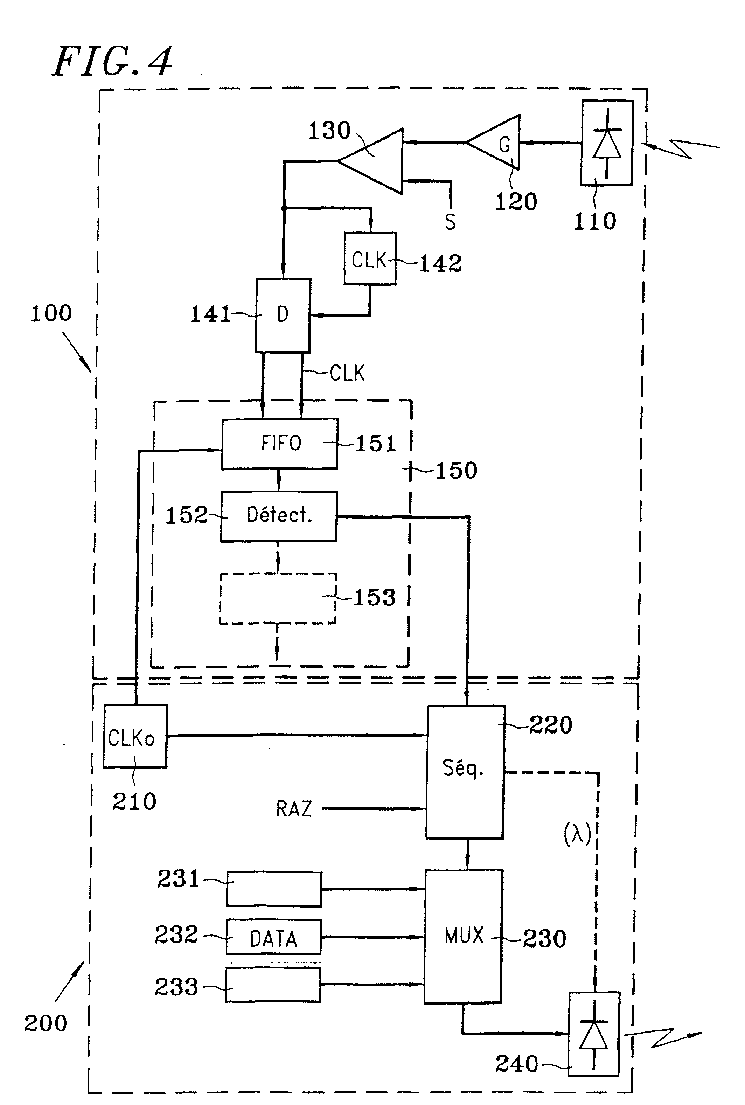

L'équipement de centre représenté sur la figure 4 comporte un module 100 de réception et un module 200 d'émission.

Le module 100 de réception comprend d'abord un détecteur optique 110, une photodiode par exemple, qui délivre un signal analogique représentatif de la trame descendante émise par l'équipement distant. Après amplification par un amplificateur 120 à gain fixe, ce signal est transformé en signal logique par un comparateur 130 à seuil S. L'horloge de l'équipement distant, récupérée par un circuit 142, ainsi que le signal logique sont appliqués à une bascule D qui fournit en sortie à la fois l'horloge récupérée et les données de trame descendante. Ces deux signaux sont reçus par un détecteur 150 de trame constitué par un circuit 151 « premier entré-premier sorti » qui permet d'absorber les différences de phase entre l'horloge distante et l'horloge 210 de centre, et par un détecteur 152 de cellules apte à établir la conformité de la structure de la trame reçue avec la structure attendue. Le détecteur 152 envoie en direction du module 200 d'émission un message d'arrêt de la séquence de recherche avec mémorisation de la trame montante ou, au contraire, un message de poursuite de la recherche. En option, le détecteur 150 de trame comporte un analyseur 153 de cellules utiles, destiné à extraire de la trame d'éventuelles données devant être traitées par l'équipement de centre.

Le module 200 d'émission comporte un séquenceur 220 qui contient l'algorithme de l'ensemble du procédé et génère la synchronisation de la trame montante. Un multiplexeur 230 permet de réaliser les différentes structures de trame à partir de la synchronisation reçue du séquenceur 220, d'un générateur 231 de cellules de début et de fin de trame, d'un générateur 232 de données éventuelles, et d'un générateur 233 de cellules vides ou de niveau 1. La trame ainsi constituée est alors appliquée à un émetteur laser 240.

Notons que si la technique WDM est utilisée, le séquenceur 220 commandera le balayage en longueur d'onde du laser 240 par variation du courant de polarisation ou de la température.

## Revendications

1. Procédé d'établissement d'une communication optique bidirectionnelle entre un équipement (10, 10') de centre et un équipement (20, 20') distant apte à fonctionner selon un mode de communication donné choisi parmi une pluralité de modes de communication, **caractérisé en ce que** ledit procédé comprend les étapes consistant à :
- définir dans l'équipement (10, 10') de centre une pluralité de structures de trame, chaque structure de trame étant appropriée à un desdits modes de communication,
- émettre de manière séquentielle ladite pluralité de structures de trame jusqu'à obtenir une réponse cohérente dudit équipement distant (20, 20'), le mode de communication de l'équipement distant étant celui correspondant à la structure de trame ayant provoqué ladite réponse cohérente.

2. Procédé selon la revendication 1, **caractérisé en ce que** la pluralité de modes de communication comprend des modes de communication simultanée et des modes de communication alternée.

3. Procédé selon la revendication 2, **caractérisé en ce que** les modes de communication simultanée comprennent les modes simplex, full duplex et diplex.

4. Procédé selon l'une des revendications 2 ou 3, **caractérisé en ce que** les modes de communication alternée comprennent les modes half duplex et part duplex.

5. Procédé selon l'une des revendications 2 ou 3, **caractérisé en ce que** la structure de trame appropriée aux modes de communication simultanée est constituée par une trame complète, sans interruption de transmission.

6. Procédé selon l'une des revendications 2 ou 4, **caractérisé en ce que** la structure de trame appropriée aux modes de communication alternée est constituée par une trame avec interruption de transmission afin de permettre à l'équipement distant (20, 20') d'émettre entre l'interruption de transmission de l'équipement de centre (10, 10') et la fin de la trame.

7. Procédé selon la revendication 6, **caractérisé en ce que**, l'élément distant étant un modulateur à réflexion, la trame consiste, après interruption de transmission, en un niveau constant destiné à être modulé et réfléchi par ledit élément distant.

8. Procédé selon l'une des revendications 6 ou 7, **caractérisé en ce que** l'interruption de transmission est définie par une cellule (C'p, C"p) dite de fin de trame descendante.

9. Procédé selon la revendication 8, **caractérisé en ce que** la position de la cellule (C'p, C"p) de fin de trame descendante est donnée par une cellule (C'1, C"1) d'en-tête de la trame.

10. Procédé selon la revendication 8, **caractérisé en ce que** la cellule (C'p, C"p) de fin de trame descendante est reconnue par l'élément distant (20, 20').

11. Procédé selon l'une quelconque des revendications 5 à 10, **caractérisé en ce qu'**une cellule (C1, C'1, C"1) d'en-tête de la trame comprend un champ spécifique indiquant la structure de trame utilisée.

12. Procédé selon l'une quelconque des revendications 1 à 11, **caractérisé en ce que**, l'équipement distant (20, 20') étant différencié en longueur d'onde, l'étape d'émettre de manière séquentielle la pluralité de structures de trame est effectuée successivement pour chaque longueur d'onde d'équipement distant (20, 20') tant que ladite réponse cohérente n'est pas obtenue.

13. Procédé selon l'une quelconque des revendications 1 à 11, **caractérisé en ce que**, l'équipement distant (20, 20') étant différencié en longueur d'onde, l'étape d'émettre de manière séquentielle la pluralité de structures de trame est effectuée successivement pour chaque longueur d'onde d'équipement distant (20, 20') à chaque structure de trame tant que ladite réponse cohérente n'est pas obtenue.

## Patentansprüche

1. Für den Betrieb in einem vorgegebenen, aus einer Vielzahl von Kommunikationsmodi ausgewählten Kommunikationsmodus geeignetes Verfahren zum Aufbau einer bidrektionellen Kommunikation zwischen einer zentralen Einheit (10, 10') und einem entfernten Gerät (20, 20'), wobei das Verfahren darin gekennzeichnet ist, dass es die folgenden Schritte umfasst:
* Definition einer Vielzahl von Bildmustern in einer zentralen Einheit (10, 10'), wobei jedes Bildmuster für eines der besagten Kommunikationsmodi geeignet ist, und
* Sequentieller Versand einer Vielzahl von Bildmustern bis zum Erhalt einer Antwort vom besagten entfernten Gerät (20, 20'), wobei der Kommunikationsmodus des entfernten Geräts der Modus ist, der dem Bildmuster entspricht, das die besagte kohärente Antwort erzeugt.

2. Verfahren gemäß Anspruch 1, **dadurch gekennzeichnet, dass** die Vielzahl von Kommunikationsmodi simultane Kommunikationsmodi und alternierende Kommunikationsmodi umfasst.

3. Verfahren gemäß Anspruch 2, **dadurch gekennzeichnet, dass** die simultanen Kommunikationsmodi Simplex-, vollständige Duplex- und Diplex-Modi umfassen.

4. Verfahren gemäß Anspruch 2 oder 3, **dadurch gekennzeichnet, dass** die alternierenden Kommunikationsmodi Halb-Duplex- und Teil-Duplex-Modi umfassen.

5. Verfahren gemäß Anspruch 2 oder 3, **dadurch gekennzeichnet, dass** das für simultane Kommunikationsmodi geeignete Bildmuster durch ein komplettes Bild ohne irgendeine Unterbrechung der Übertragung gebildet wird.

6. Verfahren gemäß Anspruch 2 oder 4, **dadurch gekennzeichnet, dass** das für die alternierenden Kommunikationsmodi geeignete Bildmuster durch einen Rahmen gebildet wird, der eine Unterbrechung bei der Übertragung umfasst, damit das entfernte Gerät (20, 20') zwischen der Unterbrechung der Übertragung von der zentralen Einheit (10, 10') und dem Bildende senden kann.

7. Verfahren gemäß Anspruch 6, **dadurch gekennzeichnet, dass** das entfernte Gerät ein Reflektionsmodulator ist und das Bild nach der Unterbrechung der Übertragung im Senden eines konstanten, vom besagten entfernten Gerät zu modulierenden und reflektierenden Niveaus besteht.

8. Verfahren gemäß Anspruch 6 oder 7, **dadurch gekennzeichnet, dass** die Unterbrechung bei der Übertragung durch eine Bildendzelle (C'p, C"p) für das Tiefenbild definiert wird.

9. Verfahren gemäß Anspruch 8, **dadurch gekennzeichnet, dass** die Position der Endzelle (C'p, C"p) des Tiefenbildes durch eine Bildverteilerzelle (C'1, C"1) vermittelt wird.

10. Verfahren gemäß Anspruch 8, **dadurch gekennzeichnet, dass** die Endzelle (C'p, C"p) des Tiefenbildes durch das entfernte Gerät (20, 20') erkannt wird.

11. Verfahren gemäß Anspruch 5 bis 10, **dadurch gekennzeichnet, dass** eine Bildverteilerzelle (Cl, C'1, C"1) ein besonderes, das verwendete Bildmuster spezifizierendes Feld umfasst.

12. Verfahren gemäß Anspruch 1 bis 11, **dadurch gekennzeichnet, dass** die entfernten Geräte (20, 20') durch die Wellenlänge unterschieden werden und die Schritte des Versands der Vielzahl von Bildmustern sequentiell im Anschluss an jede entfernte Gerätewellenlänge erfolgt, solange die besagten kohärenten Antworten nicht erhalten werden.

13. Verfahren gemäß Anspruch 1 bis 11, **dadurch gekennzeichnet dass** die entfernten Geräte (20, 20') durch die Wellenlänge unterschieden werden und die Schritte des Versands der Vielzahl von Bildmustern sequentiell im Anschluss an jede entfernte Gerätewellenlänge für jedes Bildmuster erfolgt, solange die besagte kohärente Antwort nicht erhalten wird.

## Claims

1. A method of setting up both-way optical communication between a central unit (10, 10') and a remote unit (20, 20') suitable for operating in a given communication mode selected from a plurality of communication modes, the method being **characterised in that** it comprises the steps consisting in:
· defining a plurality of frame patterns in the central unit (10, 10') with each frame pattern being appropriate to one of said communication modes; and
· sending said plurality of frame patterns sequentially until a coherent response is obtained from said remote unit (20, 20'), the communication mode of the remote unit being the mode which corresponds to the frame pattern which gave rise to said coherent response.

2. A method according to claim 1, **characterised in that** the plurality of communication modes comprises simultaneous communication modes and alternating communication modes.

3. A method according to claim 2, **characterised in that** the simultaneous communication modes comprise simplex, full duplex, and diplex modes.

4. A method according to claim 2 or 3, **characterised in that** the alternating communication modes comprise half-duplex and part-duplex modes.

5. A method according to claim 2 or 3, **characterised in that** the frame pattern appropriate to simultaneous communication modes is constituted by a complete frame, without any interruption of transmission.

6. A method according to claim 2 or 4, **characterised in that** the frame pattern appropriate to alternating communication modes is constituted by a frame including an interruption in transmission in order to enable the remote unit (20, 20') to send between the interruption of transmission from the central unit (10, 10') and the end of the frame.

7. A method according to claim 6, **characterised in that** the remote unit is a reflection modulator and the frame consists, after transmission has been interrupted, in sending a constant level to be modulated and reflected by said remote unit.

8. A method according to claim 6 or 7, **characterised in that** the interruption in transmission is defined by an end-of-frame cell (C'p, C"p) for the down-frame.

9. A method according to claim 8, **characterised in that** the position of the end cell (C'p, C"p) of the down-frame is given by a frame header cell (C'1, C"1).

10. A method according to claim 8, **characterised in that** the end cell (C'p, C"p) of the down-frame is recognized by the remote unit (20, 20').

11. A method according to any one of claims 5 to 10, **characterised in that** a frame header cell (C1, C'1, C"1) includes a special field specifying the frame pattern used.

12. A method according to any one of claims 1 to 11, **characterised in that** the remote units (20, 20') are distinguished by wavelength, and the step of sending the plurality of frame patterns sequentially is performed in succession at each remote unit wavelength as long as said coherent response is not obtained.

13. A method according to any one of claims 1 to 11, **characterised in that** the remote units (20, 20') are distinguished by wavelength, and the step of sending the plurality of frame patterns sequentially is performed in succession at each remote unit wavelength for each frame pattern as long as said coherent response is not obtained.
